Europäisches Patentamt

European Patent Office

Office européen des brevets

(11) Veröffentlichungsnummer: **0 381 011**
**A2**

## (12) EUROPÄISCHE PATENTANMELDUNG

(21) Anmeldenummer: 90101276.5

(22) Anmeldetag: 23.01.90

(51) Int. Cl.⁵: **H04Q 11/04, H04Q 3/00, H04M 7/00**

(30) Priorität: 26.01.89 DE 3902243

(43) Veröffentlichungstag der Anmeldung:
**08.08.90 Patentblatt 90/32**

(84) Benannte Vertragsstaaten:
**AT BE CH DE DK ES FR GB IT LI NL SE**

(71) Anmelder: **Standard Elektrik Lorenz
Aktiengesellschaft
Lorenzstrasse 10
D-7000 Stuttgart 40(DE)**
(84) **DE**

(71) Anmelder: **ALCATEL N.V.
Strawinskylaan 341 (World Trade Center)
NL-1077 XX Amsterdam(NL)**
(84) **BE CH DK ES FR GB IT LI NL SE AT**

(72) Erfinder: **Kleine-Altekamp, Harald
Grünwiesenstrasse 25
D-7120 Bietigheim(DE)**

(74) Vertreter: **Kugler, Hermann, Dipl.-Phys. et al
Standard Elektrik Lorenz AG Patent- und
Lizenzwesen Postfach 30 09 29
D-7000 Stuttgart 30(DE)**

(54) **Übertragungsnetz mit schaltbaren Netzknoten.**

(57) Bekannte leitungsgebundene Übertragungsnetze weisen Verstärkerstellen auf, die mit manuell umzuschaltenden Schaltverteilern versehen sind. Neuerdings wird die Forderung gestellt, elektronisch gesteuerte Schaltverteiler oder Netzknoten für die Betriebsstellen des Übertragungsnetzes zu schaffen, damit beim Ausfall einer Verbindung sehr schnell ein Ersatzweg geschaltet werden kann.

Das zugrundeliegende Problem ist, die Digitalsignal-Verbindungen auch dann zu schalten, wenn ein zentrales Netzmanagement entweder in der Aufbauphase oder durch eine Störung nicht zur Verfügung steht. Bei dem erfindungsgemäßen Übertragungsnetz fügen die End-Netzknoten (A, C) der zu schaltenden Verbindung in das zu übertragende Digitalsignal eine Kennung ein, die den Quell-Netzknoten (A) und dessen Eingangsport 2 für das Digitalsignal sowie den Ziel-Netzknoten (C) und dessen Ausgangsport (6) bezeichnet. Diese Kennung wird in dem nachfolgenden Netzknoten empfangen und an den jeweils nächsten Netzknoten bis zum anderen End-Netzknoten weitergeleitet.

Sämtliche Netzknoten überprüfen die empfangene Kennung und sind dadurch in der Lage, bei Störungen schnell Ersatzschaltungen durchzuführen.

FIG.1

EP 0 381 011 A2

## Übertragungsnetz mit schaltbaren Netzknoten

Die Erfindung betrifft ein Übertragungsnetz nach dem Oberbegriff des Patentanspruchs 1.

Herkömmliche leitungsgebundene Übertragungsnetze weisen Verstärkerstellen auf, in denen Digitalsignale an einem mechanischen Verteilergestell von Hand geschaltet werden können. Von den Netzbetreibern vorgegebenes Entwicklungsziel ist es, elektronisch gesteuerte Schaltverteiler - auch als Cross-Connects bezeichnet -für die Verstärker- oder Betriebsstellen des Übertragungsnetzes zu schaffen. Es kann damit bei einem Ausfall einer Verbindung sehr schnell im Übertragungsnetz ein Ersatzweg geschaltet werden. Dadurch wird die Verfügbarkeit von Verbindungen erhöht. Außerdem können Mietleitungen geschaltet und Verbindungen zu Wartungszwecken einfach freigeschaltet werden. Für das Schalten von Übertragungswegen ist ein wirksames sogenanntes Netzmanagement erforderlich, das z.B. von einem Zentralrechner durchgeführt wird.

Ein Übertragungsnetz nach dem Oberbegriff des Patentanspruchs 1 ist bekannt aus der EP-A1 214 398. Bei diesem System wird am Anfang jeder Digitalsignal-Verbindung in den Pulsrahmen des zu übertragenden Digitalsignals eine Kennung eingesetzt. Diese Kennung bezeichnet nach einer fortlaufenden Numerierung die Quelle des Digitalsignals. Ein Zentralrechner erfaßt die in den einzelnen Netzknoten empfangenen Kennungen und ist damit in der Lage, das Netz (jedenfalls in bezug auf die Multiplex-Hierarchie der verwendeten Digitalsignale) zu überwachen und zu steuern.

Der Erfindung liegt die Aufgabe zugrunde, ein Übertragungsnetz der eingangs genannten Art zu schaffen, bei dem das Schalten von Digitalsignalverbindungen auch in einer Aufbauphase des Netzes, in der ein zentrales Netzmanagement noch nicht zur Verfügung steht, oder etwa bei Ausfällen des Zentralrechners elektronisch gesteuert durchgeführt werden kann.

Die Aufgabe wird wie in Patentanspruch 1 angegeben gelöst.

Vorteilhafte Weiterbildungen der Erfindung sind aus den Unteransprüchen ersichtlich.

Ein Vorteil des vorstehend beschriebenen Verfahrens liegt vor allem darin, daß es ein eigenständiges Netzmanagement ohne einen aufwendigen Datenaustausch von Netzknoten zu Netzknoten ermöglicht. Insbesondere wird ein schnelles Ersatzschalten möglich, da nicht mehrere Kommunikationsstufen zu einem zentralen oder regionalen Netzmanagement durchlaufen werden müssen. Die Übertragung einer statischen Kennung - dabei wird die Kennung einmal am Anfang eine Digitalsignal-Verbindung gebildet und im Verlauf der Verbindung nur gelesen und durchgereicht - sowie das angewendete Übertragungsverfahren machen eine Auswertung der Kennung an den Ports möglich, ohne daß dazu die entsprechenden Baugruppen mit Prozessoren versehen sein müssen.

Ein Ausführungsbeispiel der Erfindung wird im folgenden anhand der Zeichnung erlautert. Es zeigen in schematischer Darstellung:

Fig. 1 ein Übertragungsnetz im Normalbetrieb,

Fig. 2 das Übertragungsnetz nach Fig. 1, bei dem eine Leitung zwischen zwei Netzknoten unterbrochen, zwischen diesen beiden Netzknoten aber eine Ersatzleitung vorhanden ist, und

Fig. 3 das Netz nach Fig. 1, bei dem eine Leitung zwischen zwei Netzknoten ausgefallen und zwischen diesen beiden Netzknoten keine Ersatzleitung vorhanden ist.

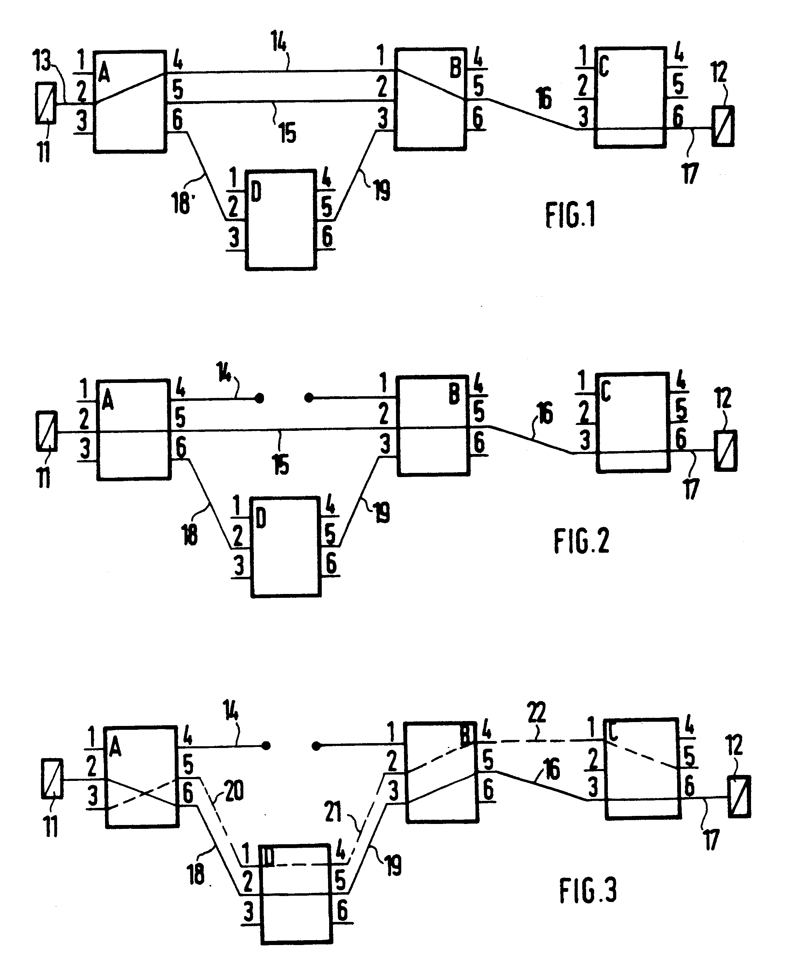

Aus den Fig. 1 bis 3 ist ein Übertragungsnetz ersichtlich, über das eine Digitalsignal-Verbindung zwischen einem ersten Gerät - z.B. einem Multiplexer -11 und einem zweiten Gerät - z.B. einem Demultiplexer -12 eingerichtet werden soll. Das Übertragungsnetz weist Netzknoten A, B, C und D auf, die jeweils mit Ports 1 bis 6 versehen sind. Diese Ports 1 bis 6 sind sowohl Signaleingänge als auch -ausgänge: die Datensignal-Verbindung ist in der Regel bidirektional. Die Netzknoten A bis D sind untereinander und mit den Geraten 11 und 12 durch Leitungen 13 bis 22 verbunden. Zum Einrichten einer neuen Verbindung werden an alle beteiligten Netzknoten entsprechende Schaltaufträge gegeben. Dies kann auf übliche Weise, z.B. über eine Bedienungsstation, oder über einen Netzmanagementrechner sofern dieser in Betrieb ist, geschehen.

Soll die dargestellte Verbindung eingerichtet werden, so erhalt der Netzknoten A den Auftrag, Port 2 mit Port 4 zu verbinden, der Netzknoten B den Auftrag, Port 1 mit Port 5 zu verbinden und der Netzknoten C den Auftrag, Port 3 mit Port 6 zu verbinden.

In den End-Netzknoten A und C wird die Durchschaltung nur dann ausgeführt, wenn ein Digitalsignal mit einem bekannten Rahmenaufbau zu übertragen ist. Ist dagegen ein Digitalsignal mit unbekanntem Rahmenaufbau zu schalten, so wird in den End-Netzknoten A und C zunächst die Schaltung noch nicht durchgeführt, sondern der Schaltauftrag nur vorgespeichert.

Anschließend fügt einer der beiden End-Netzknoten der Verbindung (A oder C) eine Kennung in das von ihm zum anderen End-Netzknoten zu sendende Digitalsignal ein. Dieser End-Netzknoten (z.B. A) ist der sogenannte Master-Netzknoten der Verbindung. Als Bestandteil der Kennung wird durch ein Bit angezeigt, ob der die Kennung sendende End-Netzknoten der Master-Netzknoten der Verbindung ist oder nicht. (Während des Bestehens der Verbindung sendet auch der andere End-Netzknoten, der nicht der Master-Netzknoten der Verbindung ist, seine Kennung innerhalb des von ihm in Gegenrichtung zu sendenden Digitalsignals.) Die in ein Digitalsignal eingefügte Kennung hat folgende Zusammensetzung: [Quell-Knoten, an-Port] [Ziel-Knoten, ab-Port] 1, wenn der Quell-Knoten des Digitalsignals der Master-Netzknoten der Verbindung ist, oder [Quell-Knoten, an-Port] [Ziel-Knoten, ab-Port] 0, wenn der Ziel-Knoten des Digitalsignals der Master-Netzknoten der Verbindung ist,

wobei als Quell-Knoten derjenige End-Netzknoten bezeichnet ist, der das Digitalsignal zum anderen End-Netzknoten der Verbindung, dem Ziel-Netzknoten, Sendet und als "an-Port" und "ab-Port" dasjenige Port des Quell-Knotens bzw. Ziel-Knotens bezeichnet ist, an dem das Digitalsignal beim Quell-Knoten ankommt bzw. vom Ziel-Knoten abgeht.

Beispielsweise ist

[A, 2] [C, 6] 1

die Kennung für das von A nach C der Verbindung 11-12 nach Fig. 1 zu übertragende Digitalsignal, wenn A der Master-Knoten der Verbindung ist, und

[C, 6] [A, 2] 0

die Kennung für das in Gegenrichtung zu übertragende Digitalsignal. Wie später erläutert wird, gehören zur Kennung noch ein Informationsbyte zum Übertragen weiterer Informationen.

Die Kennungen werden, solange eine Digitalverbindung für Digitalsignale mit bekanntem Rahmenaufbau besteht, von End-Netzknoten zu End-Netzknoten übertragen. Jeder eine Kennung empfangende dazwischenliegende Netzknoten leitet die empfangene Kennung über die in ihm geschaltete Verbindung an den jeweils nächsten im Verlauf der Verbindung in Zielrichtung folgenden Netzknoten weiter. Jeder der an einer Verbindung beteiligten Netzknoten überprüft die an seinen Ports empfangenen Kennungen daraufhin, ob die Kennungen mit den im Netzknoten geschalteten Verbindungen übereinstimmen.

Beispielsweise überprüft der Netzknoten A, bei dem das Eingangsport 2 mit dem Ausgangsport 4 verbunden ist und der an Port 4 die Kennung [A, 2] [C, 6] 1 aussendet, die am Port 4 empfangene Kennung. Enthält diese die Nummer des Ziel-Netzknotens, enthält sie also [C, 6] [A, 2] 0, so hat der Netzknoten A die Information, daß die Verbindung korrekt geschaltet ist.

Wird die Digitalsignal-Verbindung aus irgendeinem Grunde unterbrochen, so ist ein betroffener Netzknoten aufgrund von Informationen, die er aus der ständigen Überprüfung von empfangenen Kennungen hat, in der Lage, eine Ersatzschaltung durchzuführen. Für den Fall, daß Unterbrechungen von Digitalsignal-Verbindungen auftreten, werden in einem Digitalübertragungsnetz üblicherweise Leitungen freigehalten, damit sie als Ersatz-Verbindungsleitungen verwendet werden können und Ausfallzeiten nach Unterbrechungen möglichst kurz gehalten werden können.

Eine Ersatzschaltung über freie Leitungen können erfindungsgemäß die Netzknoten von sich aus durchführen, indem sie die aus der Kennung von Digitalsignalen gewonnenen Information verwenden.

Die anhand von Fig. 1 erläuterte Digitalsignal-Verbindung zwischen dem Port 2 des Netzknotens A und dem Port 6 des Netzknotens C sei z.B. durch eine Störung in der Leitung 14 zwischen den Netzknoten A und B für beide Übertragungsrichtungen unterbrochen. Dies wird in beiden Netzknoten durch die Überwachung des Digitalsignals erkannt. Derjenige Netzknoten, der für den ausgefallenen Abschnitt als Master-Netzknoten fungiert, d.h. der auf diesen Abschnitt eine Kennung mit dem Richtungsbit "1" sendet, hat die Aufgabe, eine Ersatzschaltung einzuleiten. In diesem Beispiel ist es der Netzknoten A, bei einem Ausfall der Verbindung zwischen den Netzknoten B und C wäre es der Netzknoten B.

Für die Ersatzschaltung soll möglichst der kürzeste Weg gesucht werden, um nicht unnötig viele freie Leitungen zu belegen. So versucht der Netzknoten A zunächst eine freie Leitung zwischen den Netzknoten A und B zu benutzen, und erst wenn dies nicht möglich ist, sucht er einen Weg über einen anderen Netzknoten.

Falls zwischen den Netzknoten A und B eine Ersatzleitung vorhanden ist, geschieht die Ersatzschaltung wie folgt: Die Steuerung eines jeden Netzknotens hat zumindest Kenntnis darüber, über welche Verbindungen, d.h. über welche Ports, er mit seinen Nachbarknoten verbunden ist.

Die Steuerung des Netzknotens A erkennt, daß vom Port 5 des Netzknotens A eine Leitung 15 zu dem Netzknoten B führt und daß diese auch als Ersatzleitung zur Verfügung steht, da z.B. über sie lediglich ein Testsignal übertragen wird und die übertragungsqualität gut ist. Darauf werden in dem Netzknoten A die Ports 2 und 5 miteinander verbunden, wie es in Fig. 2 gezeigt ist.

Der Netzknoten B empfängt nun an seinem Port 2 ein Signal mit der Kennung, die er vor der Störung an Port 1 empfangen hat. Seine Steuerung erkennt daran, daß der Netzknoten A auf eine Ersatzleitung geschaltet hat. Daraufhin werden in dem Netzknoten B die Ports 2 und 5 miteinander verbunden, wodurch die Verbindung zwischen den Netzknoten A und C wieder hergestellt ist (Fig. 2).

Falls zwischen den Netzknoten A und B keine Ersatzleitung vorhanden ist, geschieht die Ersatzschaltung wie folgt:

Die Steuerung des Netzknotens A versucht in diesem Fall, die Ersatzverbindung über einen anderen Netzknoten aufzubauen. Um eine möglichst günstige Ersatzverbindung herzustellen, benutzt sie die ihr zur Verfügung stehenden Netzkenntnisse.

Sie kann z.B. eine Tabelle verwenden, die darüber Auskunft gibt, über welche Nachbarknoten der Zielknoten zu erreichen ist. Eine solche Tabelle kann in jedem Netzknoten vorhanden sein. Außerdem kann die Steuerung eines Netzknotens die aufgrund von empfangenen Kennungen gewonnenen Netzkenntnisse benutzen.

Bei dem Schalten der unterschiedlichen Verbindungen kann nämlich in einem Netzknoten abgespeichert werden, über welche weiteren Netzknoten diese Verbindungen führen. Mit diesen Informationen stehen seiner Steuerung Daten über den Aufbau des Netzes in seiner Umgebung zur Verfügung, so daß sie einen günstigen Übertragungsweg suchen kann.

Wenn beispielsweise über einen Port des Netzknotens A eine Verbindung führt, die auch über die Netzknoten D, B und C führt (in Fig. 3 als gestrichelte Linien 20, 21 und 22 dargestellt) so ist der Steuerung des Netzknotens A bekannt, daß die Netzknoten B und D benachbart sind und daß sie den Netzknoten B prinzipiell über den Netzknoten D erreichen kann. In diesem Fall wird durch die Steuerung des Netzknotens A eine freie Leitung 18 zu dem Netzknoten D verwendet, und in dem Netzknoten A wird Port 2 mit Port 6 verbunden, wie es in Fig. 3 gezeigt ist.

In dem Netzknoten D wird das Digitalsignal an Port 2 empfangen und erkannt, daß in der Kennung der Netzknoten C as Zielort angegeben ist. Der Steuerung des Netzknotens D ist außerdem bekannt, daß eine Verbindung zwischen dem Netzknoten B und C besteht, da diese Tatsache beim Aufbau der gestrichelt gezeichneten Verbindung abgespeichert worden ist. So sendet sie das von dem Netzknoten A kommende Signal weiter an den Netzknoten B, indem sie Port 2 und Port 5 des Netzknotens D miteinander verbindet.

Der Netzknoten B empfängt nun an Port 3 ein Digitalsignal mit derjenigen Kennung, die er vor der Störung an seinem Port 1 empfangen hat. Seine Steuerung erkennt daran, daß der Netzknoten A auf Ersatz geschaltet hat. Daraufhin verbindet die Steuerung des Netzknotens B selbständig die Ports 3 und 5 des Netzknotens B miteinander, womit die Verbindung zwischen den Netzknoten A und C wieder hergestellt ist (vgl. Fig. 3).

Da in diesem Fall die Ersatzverbindung mehr Leitungsabschnitte belegt als die ursprüngliche Verbindung, sollte auf die ursprüngliche Verbindung zurückgeschaltet werden, nachdem die Störung beseitigt ist und der Weg wieder zur Verfügung steht.

Wenn bei einer Digitalsignal-Verbindung nur eine Übertragungsrichtung unterbrochen ist, erfolgt stets eine bidirektionale Ersatzschaltung, da Hin- und Rückrichtung einer Verbindung jeweils als zusammengehörig betrachtet werden.

Wird durch die Steuerung eines Netzknotens an einem Eingang erkannt, daß die Verbindung unterbrochen ist, so sendet sie in die Gegenrichtung ein sogenanntes AIS-Signal (Alarm Indication Signal). Damit erkennen die Steuerungen der Netzknoten auf beiden Seiten der Unterbrechung, daß eine Störung vorliegt. Die Steuerung des für diesen Abschnitt zustandigen Netzknotens kann daraufhin eine Ersatzschaltung einleiten, und zwar genauso wie für den Fall, daß beide Übertragungsrichtungen ausgefallen sind, beschrieben worden ist.

Vorstehend wurde erläutert, daß die End-Netzknoten Kennungen in die von ihnen auszusendenden Digitalsignale einfügen, die dazwischen liegenden an der Verbindung beteiligten Netzknoten empfangene Kennungen weiterleiten und daß sämtliche Netzknoten dauernd die empfangenen Kennungen überprüfen und in Störungsfällen Ersatzschaltungen vornehmen.

Wie erwähnt, erhalten die an einer zu schaltenden Verbindung beteiligten Netzknoten ihre entsprechenden Schaltaufträge, und jeder End-Netzknoten sendet, eingefügt in sein auszusendendes Digitalsignal, eine Ken die den Quell-Netzknoten und dessen Eingangsport für das Digitalsignal, den Ziel-Netzknoten und dessen Ausgangsport für dasselbe Digitalsignal bezeichnet, sowie eine Information enthält, ob der Quell-Netzknoten oder der Zel-Netzknoten des Digitalsignals als Master-Netzknoten der Verbindung fungiert.

Gemäß einer Weiterbildung der Erfindung läßt sich durch Übertragung von Kennungen nicht nur das Bestehen einer Digitalsignal-Verbindung überwachen, sondern bereits deren Aufbau. Dies wird im folgenden erläutert.

Der End-Netzknoten C, der für die als Beispiel zu schaltende Verbindung nicht der Master-Netzknoten ist, wartet mit dem Aussenden der Kennung des zu A zu sendenden Digitalsignals solange, bis er von A eine Kennung über die Verbindung empfangen hat.

Der End-Netzknoten A sendet jedoch nach Erhalt seines Schaltauftrags seine Kennung [A, 2] [C, 6] 1.

Empfängt der nachfolgende Netzknoten B diese Kennung und hat zu diesem Zeitpunkt die Verbindung noch nicht weitergeschaltet, d.g. sein Port 1 mit Port 5 verbunden, so sendet er zunächst in Richtung zum Master-Netzknoten A eine Quittungs-Kennung, die besteht aus

- seiner eigenen Knoten-Kennnummer als Quell-Netzknoten und der Nummer des Ports, an dem er die Kennung von A empfangen hat: [B, 1],
- der empfangenen Kennummer des Master-Netzknotens (als Ziel-Netzknoten) und und der Nummer von dessen betroffenem Eingangsport: [A, 2], und
- einem Bit mit dem Wert 0, das angibt, daß der Ziel-Netzknoten (A) der Master-Netzknoten der Verbindung ist,

also im Beispiel die Kennung [B, 1] [A, 2] 0.

Durch den Empfang dieser Kennung erkennt der Master-Netzknoten, daß der Verbindungsaufbau bis zum Netzknoten B fortgeschritten ist.

Sobald B die Verbindung in Richtung C weitergeschaltet (sein Port 1 mit seinem Port 5 verbunden) hat, sendet B, wie für jeden Netzknoten typisch, die empfangene Kennung, im Beispiel

[A, 2] [C, 6] 1,

weiter in Richtung zum Ziel-Netzknoten. Der folgende Netzknoten sendet wiederum, wie für B beschrieben, seine eigene Quittungs-Kennung in Richtung A, so daß der Master-Netzknoten A erkennt, daß die Verbindung um einen Übertragungsabschnitt weiter in Richtung C gewachsen ist. Empfängt der Master-Netzknoten A eine Kennung mit der Kennummer des anderen End-Netzknotens C, so ist die gewünschte Verbindung korrekt geschaltet. Die Kennungen von End-Netzknoten zu End-Netzknoten werden weiterhin übertragen wie oben beschrieben.

Der komplette Ablauf des Austausches von Kennungen beim Aufbau einer Verbindung ist noch einmal in der folgenden Tabelle dargestellt:

```
      Knoten  A                    Knoten  B                    Knoten  C


   ⟶[A,  2]  [C,  6]  1
      [B,  1]  [A,  2]  0 ⟵
      [B,  1]  [A,  2]  0 ⟵
      [B,  1]  [A,  2]  0 ⟵  .    ⟶[A,  2]  [C,  6]  1
      [C,  6]  [A,  2]  0 ⟵          [C,  6]  [A,  2]  0 ⟵
      [C,  6]  [A,  2]  0 ⟵          [C,  6]  [A,  2]  0 ⟵
```

Das Zurücksenden einer Quittungs-Kennung kann auch zur Überwachung des Schaltens von Ersatzleitungen, wie es oben in Verbindung mit Fig. 2 und Fig. 3 beschrieben ist, verwendet werden. Zum Beispiel sendet der Netzknoten B, nachdem er durch eine Ersatzschaltung über D mit A verbunden ist, seine Quittungs-Kennung an den Netzknoten A.

Wie oben erwähnt, können in Digitalsignale mit unbekanntem Rahmenaufbau keine Kennungen eingefügt werden. Falls die zu schaltende Verbindung für solche Digitalsignale vorgesehen ist, werden, bis die Verbindung aufgebaut ist, Digitalsignale mit bekanntem Rahmenaufbau verwendet und der Verbindungsaufbau wie beschrieben durch Kennungen überwacht, wobei allerdings die Schaltungen in den End-Netzknoten selbst noch nicht durchgeführt werden.

In diesem Fall muß noch die Schaltung in den End-Netzknoten der Verbindung durchgeführt werden, nachdem die Verbindung zwischen diesen geschaltet ist. Dies geschieht auf folgende Weise:

Der Master-Netzknoten, der die korrekte Durchschaltung der Verbindung anhand der Kennung erkannt hat - im vorstehenden Beispiel ist es der Netzknoten A -, setzt ein bestimmtes Bit DS des zur Kennung gehörenden Informationsbytes auf "1". Empfängt der andere End-Netzknoten C diese Kennung, so führt er die entsprechende Schaltung durch, d.h. er verbindet sein Port 3 mit seinem Port 6. Das hat zur Folge, daß der End-Netzknoten C keine Kennung mehr einfügen kann. Sobald der Netzknoten A daraufhin keine Kennung mehr empfängt, führt er ebenfalls die nötige Schaltung durch, d.h. er verbindet sein Port 2 mit seinem Port 4. Damit ist die Verbindung für das Digitalsignal mit unbekanntem Rahmenaufbau hergestellt.

Die Kennung ist beispielsweise wie folgt zusammengesetzt:

| Kenn-Nummer des Quell-Netzknotens: | 16 Bits |
|---|---|
| Nr. des betroffenen Ports, z.B. des "an-Ports" | 16 Bits |
| Kenn-Nummer des Ziel-Netzknotens: | 16 Bits |
| Nr. des betroffenen Ports, z.B. des "ab-Ports" | 16 Bits |
| Informationsbyte: | 8 Bits |

Das Informationsbyte hat folgende Belegung:

| | MSB | | | | | | | LSB |
|---|---|---|---|---|---|---|---|---|
| Bit Nr. | 7 | 6 | 5 | 4 | 3 | 2 | 1 | 0 |
| | R | DS | - | - | - | - | RB | T |

Das niedrigstwertige (LSB) Bit T (Bit Nr. 0) des Informationsbytes zeigt an, ob es sich bei dem Digitalsignal um ein Testsignal handelt oder nicht:

T = "0" : Betriebsdigitalsignal

T = "1" : Test- oder Prüfsignal

Ein Bit RB (Bit Nr. 1) des Informationsbytes wird dazu verwendet, dem für die Verbindung zuständigen Netzbetreiber zu ermöglichen, Zusatzinformationen zu übertragen. Dies wird an späterer Stelle der Beschreibung genau erlautert.

Ein Bit R (Bit Nr. 7) des Informationsbytes ist das oben erwähnte "Richtungsbit" der Kennung, das anzeigt, 0b der Quell-Netzknoten des Digitalsignals oder dessen Ziel-Netzknoten der Master-Netzknoten der Verbindung ist.

R = "0": Ziel-Netzknoten ist der Master-Netzknoten.

R = "1": Quell-Netzknoten ist der Master-Netzknoten.

Ein Bit DS (Bit NR. 6) des Informationsbytes ist das ebenfalls oben bereits erwähnte Bit DS der Kennung, das dem empfangenden End-Netzknoten mitteilt, ob er die vorgespeicherte Verbindung durchschalten soll oder nicht. Dieses Bit wird nur für den Fall benötigt, daß über die Verbindung ein Digitalsignal mit unbekanntem Rahmenaufbau übertragen werden soll (wie oben erläutert).

DS = "0": Im empfangenden End-Netzknoten soll nicht geschaltet werden.

DS = "1": Im empfangden End-Netzknoten soll geschaltet werden.

Die Kennung, deren Zusammensetzung vorstehend erläutert wurde, wird wie folgt übertragen:

Bei Digitalsignalen mit einem Rahmenaufbau nach einer der vorgenannten CCITT-Empfehlungen ist ein Bit des Rahmens (oder mehrere Bits) reserviert und kann national vom jeweiligen Netzbetreiber beliebig gebraucht werden. Bei Digitalsignalen verschiedener Bitfolgefrequenzen sind die für den nationalen Gebrauch reservierten Bits wie folgt festgelegt:

2 Mbit/s: Bit 4-8 eines jeden Rahmens, der kein Rahmenkennwort enthält (entsprechend G.704)

8 Mbit/s: Bit 12 in jedem Rahmen (entsprechend G.742)

34 Mbit/s: Bit 12 in jedem Rahmen (entsprechend G.751)

140 Mbit/s: Bit 14-16 in jedem Rahmen (entsprechend G.751)

Dieses Bit, oder im Falle mehrerer solcher Bits eines dieser Bits, wird zur Übertragung der Kennung verwendet.

Zur Synchronisation sendet der die Kennung sendende Netzknoten, der Kennung vorausgehend, ein festes Bitmuster, z.B. eine Folge von 128 Bits mit dem Binärwert "1" (Stoplage), gefolgt von 8 Bits mit dem Binärwert "0" (Start). Anschließend sendet er die Bits, die die Kennung darstellen (72 Bits), beginnend mit dem niedrigstwertigen Bit (LSB) des Informationsbytes.

Diese Folge von Stoplage, Start und Kennung wird zyklisch wiederholt, und zwar wird sie als CMI-codierter Datenstrom asynchron und mit Überabtastung in dem für den nationalen Gebrauch reservierten Bit des Digitalsignal-Rahmens übertragen. Wegen der asynchronen Übertragung in diesem Bit wird kein Rahmentakt des Digitalsignals benötigt. Damit ist es möglich, bestehende Multiplexeinrichtungen, bei denen ein Zugriff auf das Bit über die Anschlußleiste einer Bedienstation möglich ist, die jedoch keinen Rahmentakt abgeben, zum Einfügen einer Kennung zu verwenden.

Die CMI-Codierung dient der Bitsynchronisation auf der Empfangsseite. In der CMI-Codierung werden die Binärwerte folgendermaßen dargestellt:

binäre "0" : "01"

binäre "1" : "00" und "11", alternierend

Die Schrittgeschwindigkeit, mit der die Kennung übertragen wird, ist der Rahmenwiederholfrequenz der jeweiligen Hierarchie-Ebene angepaßt. Sie ist so gewählt, daß eine mehr als 5fache Überabtastung erfolgt. Durch eine Mehrfachauswertung des Signals auf der Empfangsseite können somit einzelne Übertragungsfehler korrigiert werden.

Es ergeben sich folgende Schrittgeschwindigkeiten für die Kennung:

| Hierarchie-ebene | Rahmenwiederholfrequenz | Frequenz des freien Bits | Schrittgeschwindigkeit für Übertragung der Kennung | Abtastverhältnis |
|---|---|---|---|---|
| 2 Mbit/s | 8.00 kHz | 4.00 kHz | 600 Baud | 1 : 6.7 |
| 8 Mbit/s | 9.96 kHz | 9.96 kHz | 1200 Baud | 1 : 8.3 |
| 34 Mbit/s | 22.38 kHz | 22.38 kHz | 2400 Baud | 1 : 9.7 |
| 140 Mbit/s | 47.56 kHz | 47.56 kHz | 4800 Baud | 1 : 9.9 |

Für die Rahmendauer der Kennung ergibt sich bei einer Rahmenlänge von etwa 200 Bits (Kennungsbits und Synchronisationsbits)

bei

2 Mbit/s: 0.67 s

8 Mbit/s: 0.33 s

34 Mbit/s: 0.17 s

140 Mbit/s: 0.08 s

Für den Fall, daß ein Netzbetreiber das für den nationalen Gebrauch reservierte Bit des Digitalsignals bereits gebraucht, z.B. zur Übertragung irgendeiner Zusatzinformation (Fehlermeldungen, Alarme), kann die Kennung trotzdem wie beschrieben in diesem reservierten Bit übertragen werden, ohne daß auf die Übertragung der Information verzichtet werden muß. Die Information wird dann in dem Bit RB des Informationsbytes der Kennung übertragen. Dieses Bit RB kann jeder Netzknoten zur Übertragung von Zusatzinformation setzen oder lesen. Da allerdings die Übertragungskapazität für die Zusatzinformation druch die beschriebene Übertragungsart herabgesetzt ist, sollte zur Übertragung der Kennung vorzugsweise ein Bit des Digitalsignals verwendet werden, über das nur quasi-statische Signale Übertragen werden (z.B. Fehlermeldungen, Alarme u.dgl.). Die maximale Verzögerung bei einer Änderung des Signals (Alarm) ist gleich der Rahmendauer der jeweiligen Kennung.

Damit ist eine transparente Übertragung von quasi-statischen Signalen über das Netz gewährleistet, obwohl das ursprünglich dafür vorgesehene Bit innerhalb des Netzes zur Übertragung der Kennung verwendet wird. Wird über die Digitalsignalverbindung ein Digitalsignal übertragen, daß einen unbekannten Rahmenaufbau hat (z.B. ein codiertes Videosignal), so kann die Kennung nicht in das Signal eingefügt werden.

Die Vorteile der hier beschriebenen Kennungsübertragung können auch für eine solche Verbindung genutzt werden, indem die Verbindung zunächst unter Verwendung eines Digitalsignals bekannten Rahmenaufbaus aufgebaut und dabei wie beschrieben die Kennungen übertragen werden. Sobald die Verbindung im Netz geschaltet und anhand der Kennung überprüft worden ist, wird das eigentliche Nutzsignal mit unbekanntem Rahmenaufbau über diese Verbindung übertragen.

**Ansprüche**

1. Übertragungsnetz mit schaltbaren Netzknoten zum Schalten von Digitalsignal-Verbindungen, bei dem End-Netzknoten von Digitalsignalverbindungen in das zu übertragende Digitalsignal eine Kennung einfügen, **dadurch gekennzeichnet,** daß jeder der beiden End-Netzknoten (A, C) einer Digitalsignal-Verbindung in das zum jeweils anderen End-Netzknoten zu übertragende Digitalsignal eine Kennung einfügt, die bezeichnet:

- den die Kennung einfügenden End-Netzknoten (A) als Quell-Netzknoten des Digitalsignals,

- den Eingangsport (2) für das Digitalsignal am Quell-Netzknoten,

- den Ziel-Netzknoten (C) sowie dessen Ausgangsport (6) für das Digitalsignal, und

daß jeder ein Digitalsignal mit einer Kennung empfangende Netzknoten (B) die Kennung an den in Zielrichtung folgenden Netzknoten (C) weitersendet.

2. Übertragungsnetz nach Anspruch 1, dadurch gekennzeichnet, daß jeder Netzknoten eine empfangene Kennung überprüft und bei Feststellen einer Störung oder Änderung eine Ersatzschaltung durchführt.

3. Übertragungsnetz nach Anspruch 1 oder 2, dadurch gekennzeichnet, daß beim Aufbau einer Digitalsignal-Verbindung nur einer (A) der beiden End-Netzknoten (A, C) seine Kennung in Richtung zum anderen sendet,
daß jeder der dazwischenliegenden Netzknoten, solange er von dem einen End-Netzknoten (A) die Kennung und aus der Gegenrichtung noch keine zu der zu schaltenden Digitalsignal-Verbindung gehörende Kennung empfängt, eine eigene Quittungs-Kennung in Richtung zu dem einen End-Netzknoten (A) sendet, die ihn als Quell-Netzknoten (B) und seinen betroffenen Port (1) und den einen End-Netzknoten (A) als den Ziel-Netzknoten und dessen Eingangsport (2) bezeichnet und daß der andere End-Netzknoten (C) bei Empfang der Kennung von dem einen End-Netzknoten (A) seine Kennung, eingefügt in das von ihm auszusendende Digitalsignal der Digitalsignal-Verbindung, sendet.

4. Übertragungsnetz nach einem der vorstehenden Ansprüche, dadurch gekennzeichnet, daß die Netzknoten zur Übertragung der Kennungen ein vorgegebenes Bit in dem Rahmen des zu übertragenden Digitalssignals verwenden, das durch den Netzbetreiber nur für die Übertragung von quasi-statischen Signalen verwendet wird und daß sie die quasi-statischen Signale statt mit dem vorgegebenen Bit des Rahmens mit einem Bit, das zur Kennung gehört, übertragen.

5. Übertragungsnetz nach einem der Ansprüche 1 bis 3, dadurch gekennzeichnet, daß die Netzknoten einer Digitalsignal-Verbindung, die für Digitalsignale mit unbekanntem Rahmenaufbau vorgesehen ist, die Kennungen aussenden, indem sie zunächst Digitalsignale mit bekanntem Rahmenaufbau verwenden und sie in diese einfügen, bis die gewünschte Digitalsignal-Verbindung aufgebaut ist.

6. Übertragungsnetz nach einem der vorstehenden Ansprüche, dadurch gekennzeichnet, daß die Netzknoten als Bestandteil der Kennung eine Zusatzinformation übertragen, die anzeigt, ob für die Digitalsignal-Verbindung der Quell-Netzknoten oder der Ziel-Netzknoten des Digitalsignals der Master-Netzknoten ist.

8

FIG.1

FIG.2

FIG.3